(19) Europäisches Patentamt
European Patent Office
Office européen des brevets

(11) EP 1 962 365 A1

(12) **EUROPEAN PATENT APPLICATION**
published in accordance with Art. 153(4) EPC

(43) Date of publication:
**27.08.2008 Bulletin 2008/35**

(51) Int Cl.:
**H01M 10/44** *(2006.01)*   **H02J 7/00** *(2006.01)*

(21) Application number: **05814531.9**

(86) International application number:
**PCT/JP2005/022798**

(22) Date of filing: **12.12.2005**

(87) International publication number:
**WO 2007/069293 (21.06.2007 Gazette 2007/25)**

(84) Designated Contracting States:
**DE FR GB**

(72) Inventor: **OSHIMI, Masanori**
**2-1-61, Shiromi, Chuo-ku, Osaka 540-6207, (JP)**

(71) Applicant: **Matsushita Electric Industrial Co., Ltd.**
**Kadoma-shi**
**Osaka 571-8501 (JP)**

(74) Representative: **Grünecker, Kinkeldey,**
**Stockmair & Schwanhäusser**
**Anwaltssozietät**
**Leopoldstrasse 4**
**80802 München (DE)**

(54) **CONTACTLESS CHARGING-TYPE BATTERY SYSTEM, CHARGING DEVICE, AND BATTERY PACK**

(57)     It is an object to provide a non-contact charging type battery system capable of easily charging a secondary battery requiring to control a charging voltage.

There are provided a battery pack 2 for storing a secondary battery and a charging device 1 for supplying a charging energy to the secondary battery, and the charging device 1 includes an electromagnetic energy output portion 10 for outputting the charging energy as an electromagnetic energy and a charging device side control portion 14 for controlling an operation of the electromagnetic energy output portion 10, and the battery pack 2 includes a reconverting portion 20 for inputting the electromagnetic energy and converting the electromagnetic energy into a dc power, and a battery pack side control portion 23 for controlling at least a voltage of the dc power.

*FIG. 2*

## Description

TECHNICAL FIELD

The present invention relates to a non-contact charging type battery system, a charging device and a battery pack.

BACKGROUND ART

Conventionally, there has been proposed a power system for a mobile electronic apparatus which can eliminate a problem caused by an electrical contact present between a charging device for charging a secondary battery to be used as a power supply for a mobile electronic apparatus such as a portable telephone and the secondary battery, thereby charging the secondary battery in a non-contact state with the charging device (see Patent Document 1, for example).

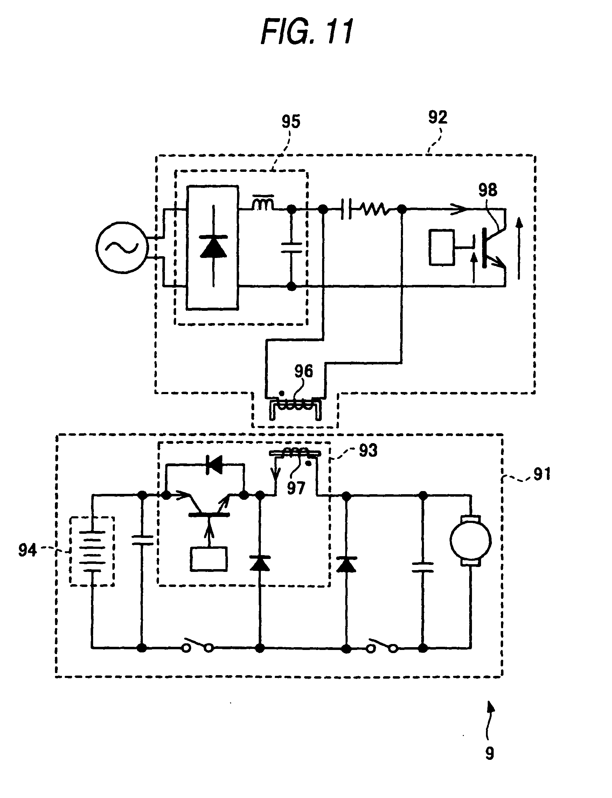

Fig. 11 is a circuit diagram showing the power system for a mobile electronic apparatus, and a power system 9 for a mobile electronic apparatus comprises a mobile electronic apparatus body 91 and a charging device 92.

The mobile electronic apparatus body 91 has a step-down chopper 93 and a secondary battery 94, and the charging device 92 has a rectifying circuit 95, an exciting coil 96 and a switching element 98. Moreover, the step-down chopper 93 has a choke coil 97.

The charging device 92 switches a dc power output from the rectifying circuit 95 through the switching element 98 and discharges an electromagnetic energy from the exciting coil 96. At time of the charging, the choke coil 97 is electromagnetically coupled to the exciting coil 96. Therefore, an ac power is induced to the choke coil 97 so that the secondary battery 94 is charged by the dc power obtained by rectifying the ac power.

In the power system for a mobile electronic apparatus, a nickel-cadmium battery is used as the secondary battery. However, a lithium ion battery having a smaller size, a lighter weight and a larger storage capacity than those of the nickel-cadmium battery has recently been used mainly as the secondary battery.

Patent Document 1 : JP-A-2003-244855 Publication ([0015] to [0018]), Fig. 1)

DISCLOSURE OF THE INVENTION

PROBLEMS TO BE SOLVED

In the lithium ion battery, however, it is necessary to control a voltage at time of charging, and furthermore, to prevent an overcharge in respect of a safety. By using the lithium ion battery as the secondary battery of the power system for a mobile electronic apparatus, accordingly, it is necessary to control an electromagnetic energy to be discharged in the charging device, and furthermore, to control a charging voltage and a charging current of the lithium ion battery through the mobile electronic apparatus, thereby preventing an overcharge. As a result, it is necessary to incorporate a control circuit and a protection circuit into the charging device and the mobile electronic apparatus, respectively. For this reason, there is a problem in that a structure of the power system for the mobile electronic apparatus is complicated.

The invention has been made to solve the conventional problems and has an object to provide a non-contact charging type battery system, a charging device and a battery pack in which a structure of a charging device for a secondary battery requiring to control a charging voltage and a structure of a circuit provided around the secondary battery can be simplified more greatly than those of a conventional system.

MEANS FOR SOLVING THE PROBLEMS

A non-contact charging type battery system according to the invention has such a structure as to comprise a battery pack for storing a secondary battery requiring to control a charging voltage and a charging device for supplying a charging power to the secondary battery, the charging device having an electromagnetic energy output portion for outputting the charging power as an electromagnetic energy, and the battery pack including a reconverting portion for reconverting the electromagnetic energy into the charging power, and a control portion for controlling at least a charging voltage in the charging voltage and a charging current when the secondary battery is charged with the charging power which is obtained by the reconversion.

By the structure, it is possible to simplify a structure of the charging device for the secondary battery which requires to control the charging voltage and a structure of a circuit provided around the secondary battery more greatly than those of a conventional system.

The non-contact charging type battery system according to the invention has such a structure that the electromagnetic energy output portion includes a charging device side rectifying portion for rectifying a commercial power supply, a switching portion for switching a power rectified by the charging device side rectifying portion, and a charging device side coil portion for outputting the power thus switched as an electromagnetic energy, and the reconverting portion includes a battery pack side coil portion for converting the electromagnetic energy into an ac power, and a battery pack side rectifying portion for converting the ac power into a dc power.

With the structure, it is possible to charge the secondary battery stored in the battery pack in non-contact.

The non-contact charging type battery system according to the invention has such a structure that the battery pack includes an identifying signal transmitting portion for transmitting a predetermined identifying signal, and the charging device includes an identifying signal receiving portion for controlling the switching portion into an operation state when receiving the identifying signal.

By the structure, the charging device can be brought into an operation state in response to the identifying signal transmitted from the battery pack when the battery pack approaches the charging device.

A charging device according to the invention serves to supply a charging energy to a secondary battery requiring to control a charging voltage and has such a structure as to comprise a rectifying portion for rectifying a commercial power supply, a switching portion for switching a power rectified by the rectifying portion, a coil portion for outputting the power thus switched as an electromagnetic energy, and a control portion for controlling an operation of the switching portion corresponding to a voltage on both ends of the coil portion.

By the structure, it is possible to supply a charging energy in non-contact with the secondary battery which requires to control the charging voltage.

The charging device according to the invention has such a structure that the control portion controls the switching portion into a continuous operation when the voltage is lower than a predetermined threshold voltage, controls the switching portion into a stop state when the voltage is equal to or higher than the threshold voltage, and controls the switching portion into an intermittent operation state when a predetermined time passes after stopping the operation of the switching portion.

By the structure, it is possible to operate the charging device at time of charging of the secondary battery.

A battery pack according to the invention serves to store a secondary battery requiring to control a charging voltage and has such a structure as to comprise a reconverting portion for reconverting an electromagnetic energy supplied from a charging device into a charging power, and a control portion for controlling a charging voltage and a charging current when charging the secondary battery with the charging power which is obtained by the reconversion.

By the structure, it is possible to charge the secondary battery requiring to control the charging voltage in non-contact while controlling the charging voltage and current.

The battery pack according to the invention has such a structure as to comprise a housing for integrally storing the reconverting portion, the battery pack side control portion and the secondary battery.

By the structure, it is possible to charge the secondary battery stored in the battery pack in a non-attachment state to the mobile electronic apparatus.

A battery pack according to the invention serves to store a secondary battery requiring to control a charging voltage and has such a structure as to comprise a reconverting portion for reconverting an electromagnetic energy supplied from a charging device into a charging power, and a control portion for controlling a charging voltage when charging the secondary battery with the charging power which is obtained by the reconversion.

With the structure, it is possible to charge the secondary battery requiring to control the charging voltage in non-contact while controlling the charging voltage.

The battery pack according to the invention has such a structure as to comprise a housing for integrally storing the reconverting portion, the control portion and the secondary battery.

By the structure, it is possible to charge the secondary battery stored in the battery pack in a non-attachment state to the mobile electronic apparatus.

The battery pack according to the invention has such a structure that the housing and a coat of the secondary battery are formed by an insulating material.

By the structure, it is possible to prevent a charging electromagnetic energy from being consumed by using the housing and the coat of the secondary battery.

ADVANTAGE OF THE INVENTION

The invention can provide a non-contact charging type battery system in which a battery pack for storing a secondary battery requiring to control a charging voltage and a charging device for supplying a charging energy to the secondary battery are provided so that a structure of the charging device for the secondary battery and that of a circuit provided around the secondary battery can be simplified more greatly than those of a conventional system.

BRIEF DESCRIPTION OF THE DRAWINGS

Fig. 1 is a perspective view showing a charging device and a table according to an embodiment of the invention,

Fig. 2 is a perspective view showing a battery pack and a portable telephone according to the embodiment of the invention,

Fig. 3 is a block diagram showing a non-contact charging type battery system according to a first embodiment of the invention,

Fig. 4 is a circuit diagram showing the non-contact charging type battery system according to the first embodiment of the invention,

Figs. 5(a)-5(e) are sectional views showing various battery packs to be used in the first embodiment of the invention,

Fig. 6 is a perspective view showing a charging device and a battery pack according to the first embodiment of the invention,

Fig. 7 is a chart showing a charging sequence of a lithium ion battery according to the first embodiment of the invention,

Fig. 8 is a block diagram showing a non-contact charging type battery system according to a second embodiment of the invention,

Fig. 9 is a circuit diagram showing a voltage control circuit according to the second embodiment of the invention,

Fig. 10 is a block diagram showing a non-contact charging type battery system according to a third embodiment of the invention, and

Fig. 11 is a circuit diagram showing a power system for a mobile electronic apparatus of the conventional art.

EXPLANATION OF DESIGNATION

| 1  | charging device                          |
|----|------------------------------------------|
| 2  | battery pack                             |
| 5  | lid                                      |
| 10 | electromagnetic energy output portion    |
| 11 | charging device side rectifying portion  |
| 12 | switching portion                        |
| 13 | charging device side coil portion        |
| 14 | charging device side control portion     |
| 20 | reconverting portion                     |
| 21 | battery pack side coil portion           |
| 22 | battery pack side rectifying portion     |
| 23 | battery pack side control portion        |
| 24 | lithium ion battery                      |

BEST MODE FOR CARRYING OUT THE INVENTION

Three embodiments of a non-contact charging type battery system according to the invention will be described below with reference to the drawings.

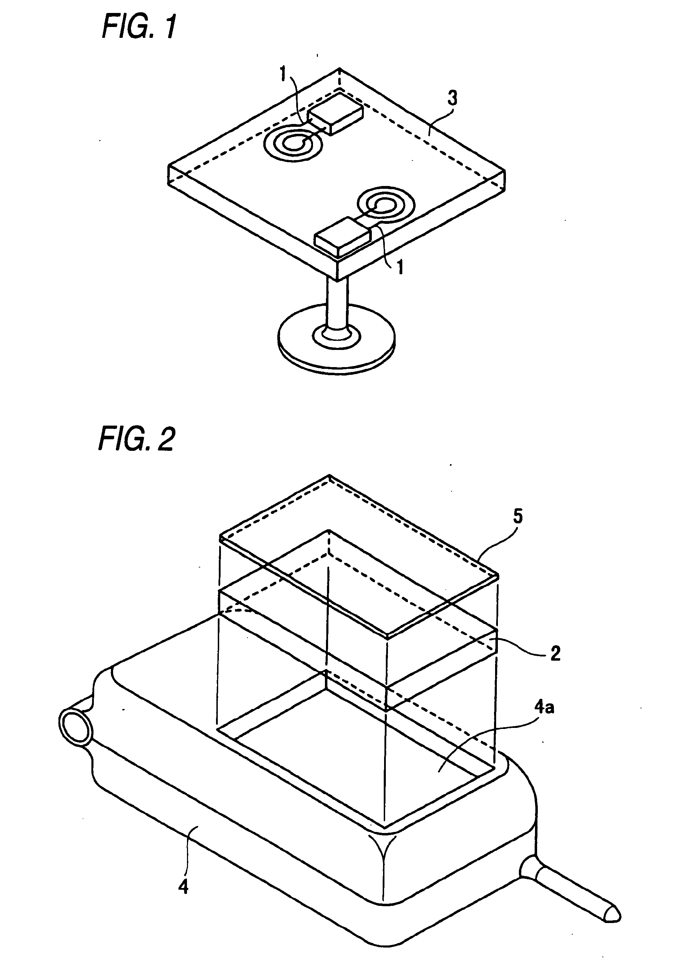

In the three embodiments, it is assumed that a charging device 1 is embedded in a table 3 as shown in Fig. 1. While Fig. 1 shows an example in which two charging devices 1 are embedded, the number of the charging devices 1 to be embedded in the table 3 is not restricted.

In the three embodiments, as shown in Fig. 2, a mobile electronic apparatus to which a secondary battery is attached is a portable telephone 4, and a battery pack 2 for storing the secondary battery is attached to a concave portion 4a provided on a back face of the portable telephone 4 and is covered with a lid 5. Moreover, the secondary battery to be stored in the battery pack 2 is a lithium ion battery.

(First Embodiment)

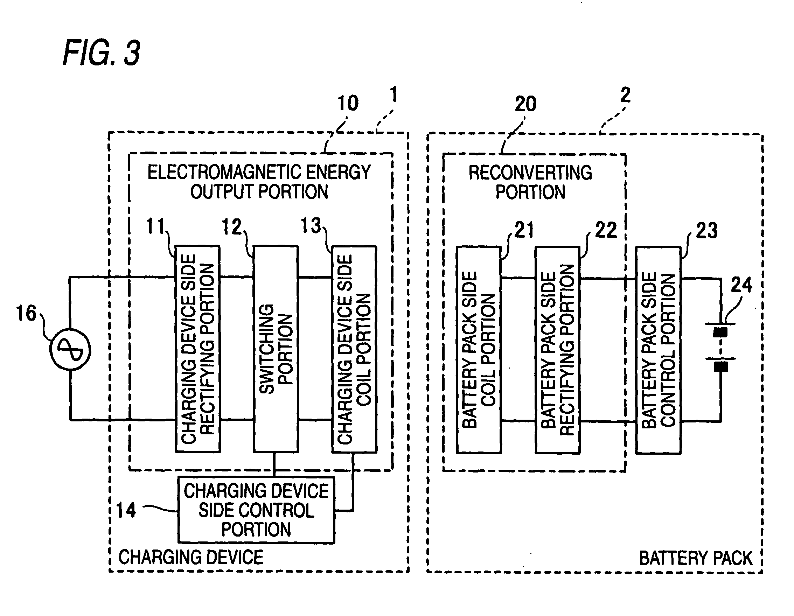

A non-contact charging type battery system according to a first embodiment of the invention has a battery pack 2 for storing a lithium ion battery to be a secondary battery requiring to control a charging voltage and a charging device 1 for supplying a charging power to the battery pack 2 as shown in Fig. 3.

The charging device 1 includes an electromagnetic energy output portion 10 for changing a charging power into an electromagnetic energy, and a charging device side control portion 14 for controlling an operation of the electromagnetic energy output portion 10.

The electromagnetic energy output portion 10 has a charging device side rectifying portion 11 for rectifying a commercial power supply (alternating current) 16, a switching portion 12 for switching a dc power rectified by the charging device side rectifying portion 11 at a higher frequency than a commercial frequency, thereby reconverting the dc power into an ac power, and a charging device side coil portion 13 for outputting, as an electromagnetic energy, the ac power output from the switching portion 12.

The battery pack 2 includes a reconverting portion 20 for reconverting the electromagnetic energy output from the charging device side coil portion 13 into a charging power, and a battery pack side control portion 23 for controlling a charging voltage (or controlling a charging voltage and a charging current) when a lithium ion battery 24 is charged with the charging power output from the reconverting portion 20.

The reconverting portion 20 has a battery pack side coil portion 21 for converting the electromagnetic energy output from the charging device side coil portion 13 into an ac power, and a battery pack side rectifying portion 22 for converting the ac power into a dc power.

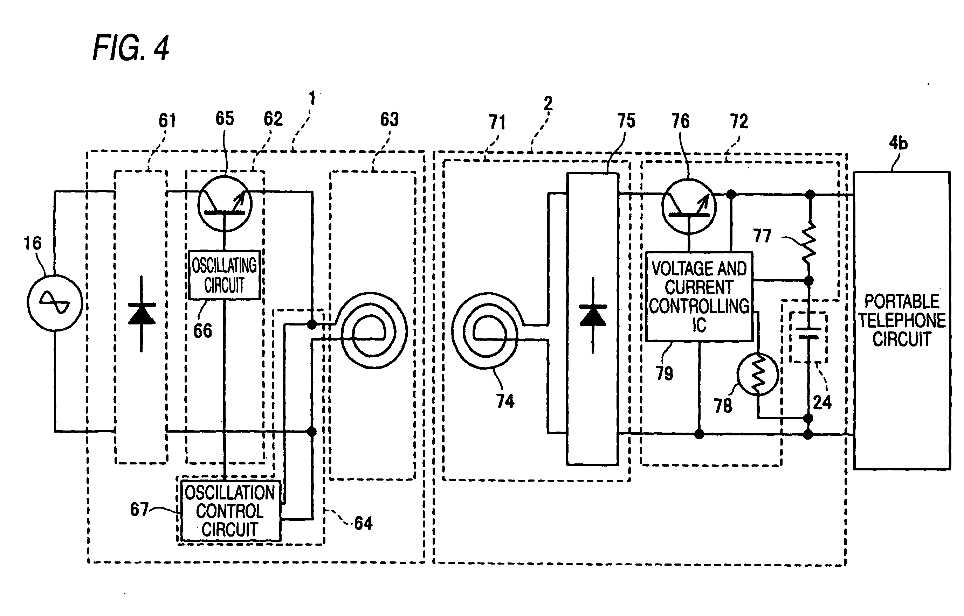

Fig. 4 is a circuit diagram showing the non-contact charging type battery system according to the first embodiment, and the charging device 1 includes a charging device side rectifying circuit 61 functioning as the charging device side rectifying portion 11 for rectifying and smoothing the commercial power supply 16 and outputting a direct current, a switching circuit 62 functioning as the switching portion 12 for reconverting the direct current rectified by the charging device side rectifying circuit 61 into an alternating current, a charging device side coil 63 functioning as the charging device side coil portion 13 for outputting, as an electromagnetic energy, the alternating current output from the switching circuit 62, and a charging device side control circuit 64 functioning as the charging device side control portion 14 for controlling the operation of the switching portion 12 corresponding to a voltage on both ends of the charging device side coil 63.

The switching circuit 62 has a charging device side transistor 65 having a collector connected to a cathode output of the charging device side rectifying circuit 61 and an emitter connected to one of terminals of the charging device side coil 63, and an oscillating circuit (VCO) 66 for applying a pulse in a predetermined cycle to a base of the charging device side transistor 65.

Furthermore, the charging device side control circuit 64 has an oscillation control circuit 67 for controlling an oscillating frequency of the oscillating circuit 66 corresponding to a voltage generated on both ends of the charging device side coil 63.

In the invention, the charging device 1 is embedded in the table 3, and charging is carried out when a portable telephone 4 having the battery pack 2 attached thereto or the battery pack 2 removed from the portable telephone 4 is put on the table 3.

The battery pack 2 has an electromagnetic energy converting circuit 71 functioning as the reconverting portion 20, a voltage and current control circuit 72 functioning as the battery pack side control portion 23, and a lithium ion battery 24.

The lithium ion battery 24 has such a structure as to supply a power to a portable telephone circuit 46 built in a portable telephone when it is attached to the portable telephone 4.

The electromagnetic energy converting circuit 71 has a battery pack side coil 74 functioning as the battery pack side coil portion 21 to be electromagnetically coupled to the charging device side coil 63, and a battery pack side rectifying circuit 75 functioning as the battery pack side rectifying portion 22 for rectifying an ac power output from the battery pack side coil 74.

The voltage and current control circuit 72 includes a battery pack side transistor 76 having a collector connected to an anode terminal of the battery pack side rectifying circuit 75 and an emitter connected to an anode terminal of the lithium ion battery 24, a current detecting resistor 77 for detecting a current flowing into the lithium ion battery 24, a thermistor 78 for detecting a temperature of the lithium ion battery 24, and a voltage and current controlling IC 79 for applying a control signal to control the voltage applied to the lithium ion battery 24 and the current flowing into the lithium ion battery 24 by the battery pack side transistor 76 to a base of the battery pack side transistor 76.

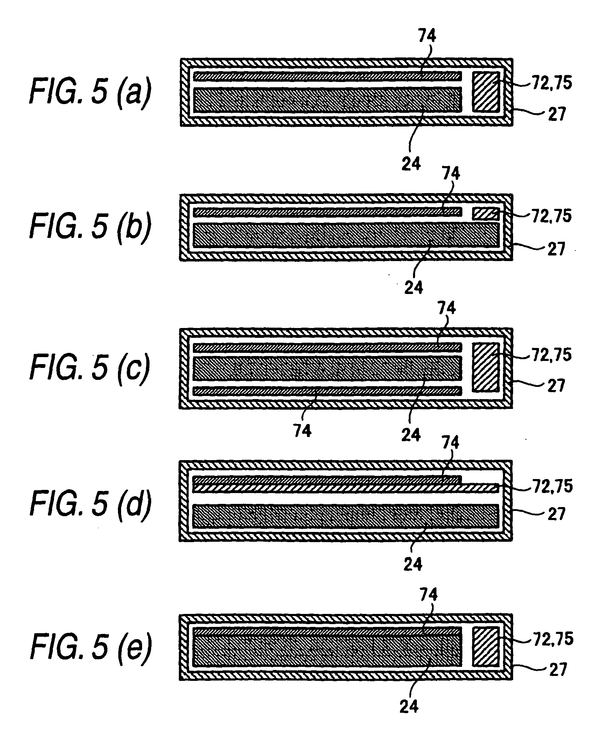

Figs. 5(a) to (e) show the battery pack 2 for storing the lithium ion battery 24, the voltage and current control circuit 72, the battery pack side coil 74 and the battery pack side rectifying circuit 75 in one housing 27. The battery pack 2 has such a structure that charging can be carried out also in a state in which the battery pack 2 is attached to the portable telephone 4 or is removed from the portable telephone 4. Since the voltage and current control circuit 72 and the battery pack side rectifying circuit 75 are disposed on the same substrate, the reference numerals 72 and 75 are shown in overlapping in Figs. 5(a) to (e).

It is desirable that the housing 27 and the coat of the lithium ion battery 24 should be fabricated by a material which generates an eddy current loss to cause no heat generation when they are put in an ac magnetic field, that is, an insulating material such as plastic.

Various disposing manners shown in Figs. 5(a) to (e) can be proposed for the arrangement of the lithium ion battery 24, the voltage and current control circuit 72, the battery pack side coil 74 and the battery pack side rectifying circuit 75 in the housing 27.

In Fig. 5(a), the battery pack side coil 74 is disposed on one of surface sides of the lithium ion battery 24, and the voltage and current control circuit 72 and the battery pack side rectifying circuit 75 are disposed on a side of the lithium ion battery 24.

In Fig. 5(b), the voltage and current control circuit 72 is disposed and the battery pack side coil 74 and the battery pack side rectifying circuit 75 are provided on one of the surface sides of the lithium ion battery 24.

In Fig. 5(c), a pair of battery pack side coils 74 are disposed on one of the surface sides and the other surface side of the lithium ion battery 24, and the voltage and current control circuit 72 and the battery pack side rectifying circuit 75 are disposed on the side of the lithium ion battery 24.

In Fig. 5(d), the voltage and current control circuit 72 and the battery pack side rectifying circuit 75 are disposed on one of the surface sides of the lithium ion battery 24, and the battery pack side coil 74 is printed on a substrate on which the voltage and current control circuit 72 and the battery pack side rectifying circuit 75 are mounted.

In Fig. 5(e), the battery pack side coil 74 is directly printed on one of the surface sides of the lithium ion battery 24, and the voltage and current control circuit 72 and the battery pack side rectifying circuit 75 are disposed on the side of the lithium ion battery 24.

Next, description will be given to the operation of the non-contact charging type battery system according to the invention.

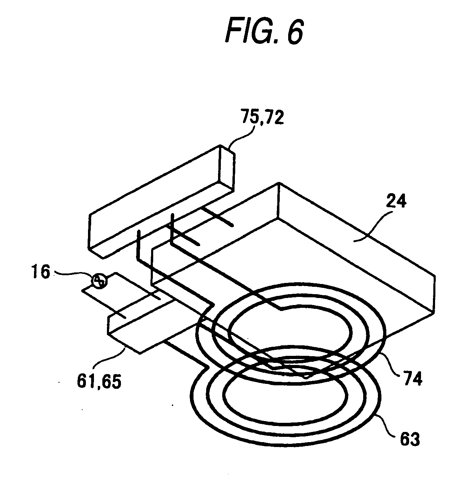

Fig. 6 is a perspective view in which the battery pack 2 is disposed above the charging device 1. First of all, an ac power supplied from the commercial power supply 16 is converted into a dc power through the charging device side rectifying circuit 61 and the dc power is switched by the switching circuit 62, and is converted into an ac power having a high frequency of 50 KHz, for example. The ac power is converted into an electromagnetic energy by the charging device side coil 63 and is radiated into the air.

When the battery pack 2 is caused to approach the charging device 1 so that the battery pack side coil 74 is electromagnetically coupled to the charging device side coil 63, next, a line of magnetic force generated by the charging device side coil 63 intersects the battery pack side coil 74 so that an ac power is induced into the battery pack side coil 74.

The ac power is converted into a dc power by the battery pack side rectifying circuit 75 and is thus supplied to the voltage and current control circuit 72.

Then, the voltage and current controlling IC 79 (see Fig. 4) included in the voltage and current control circuit 72 controls a voltage and a current of a charging power for charging the lithium ion battery 24.

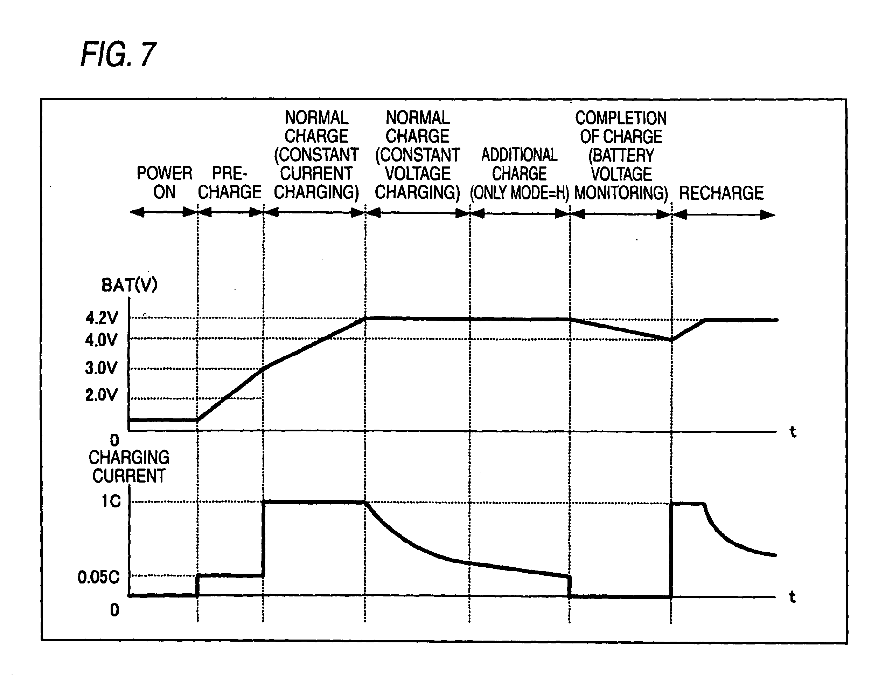

Fig. 7 is a chart showing a charging sequence of the lithium ion battery 24. First of all, the voltage and current controlling IC 79 maintains a charging current to be 0.05C and carries out precharging when deciding that a terminal voltage of the lithium ion battery 24 is equal to or lower than 3.0 V, and carries out constant current charging for maintaining the charging current to be IC when deciding that the terminal voltage is equal to or higher than 3.0 V. During the precharging and the constant current charging, the terminal voltage of the lithium ion battery 24 is gradually raised.

When deciding that the terminal voltage reaches 4.2 V, next, the voltage and current controlling IC 79 carries out constant voltage charging for maintaining the charging voltage to be applied to the lithium ion battery 24 to be 4.2 V. During the constant voltage charging, the charging current is gradually decreased from 1C.

When the charging current is decreased to 0.05C, the voltage and current controlling IC 79 decides that a full charging state is brought and stops the supply of the charging power to the lithium ion battery 24.

When deciding that the terminal voltage of the lithium ion battery 24 is dropped to 4.0 V, the voltage and current controlling IC 79 starts recharging.

With a change in the charging current to be controlled by the voltage and current controlling IC 79, the voltage on both ends of the charging device side coil 63 is varied. Based on the voltage on both ends of the charging device side coil 63, therefore, the operation of the charging device 1 is controlled so that an unnecessary radiation of the electromagnetic energy in the charging device 1 can be prevented.

In the first embodiment, the oscillation control circuit 67 of the charging device 1 controls the oscillating circuit 67 into a continuous oscillating state when the voltage generated on both ends of the charging device side coil 63 is lower than a threshold voltage corresponding to a charging current of 0.05C. The oscillation control circuit 67 controls the oscillating circuit 66 into a stop state if the voltage is equal to or higher than the threshold voltage, and controls the oscillating circuit 66 into an intermittent oscillating state in order to indicate that a standby state is set when the stop state of the oscillating circuit 66 is continuously maintained for a predetermined time or more.

As described above, according to the first embodiment, the structures of the charging device for charging, in non-contact, a battery requiring to control the charging voltage, for example, the lithium ion battery and the battery pack can be simplified more greatly than those in the conventional art.

(Second Embodiment)

A non-contact charging type battery system according to a second embodiment of the invention is intended for further simplifying a circuit structure in a battery pack by omitting a current control of a battery pack side control portion 23.

More specifically, a coefficient of coupling k between a charging device side coil 63 and a battery pack side coil 74 is defined by "Equation 1" and is always equal to or smaller than "1.0".

[Equation 1]

$$k = \frac{M}{\sqrt{L_1 L_2}} \leq 1.0$$

$L_1$ represents an inductance of a charging device side coil,
$L_2$ represents an inductance of a battery pack side coil, and
M represents a mutual inductance.

More specifically, a maximum value of the mutual inductance M is a geometric mean value of the inductance $L_1$ of the charging device side coil 63 and the inductance $L_2$ of the battery pack side coil 74. When the mutual inductance M is increased, an ac power induced into the battery pack side coil 74 is increased.

By setting the mutual inductance M to be a proper value through a change in conductor diameters and the numbers of windings of the charging device side coil 63 and the battery pack side coil 74, it is possible to limit a charging current generated from an ac power induced into the battery pack side coil 74 to be equal to or smaller than 1C. Consequently, it is possible to omit a current control circuit in a battery pack 2.

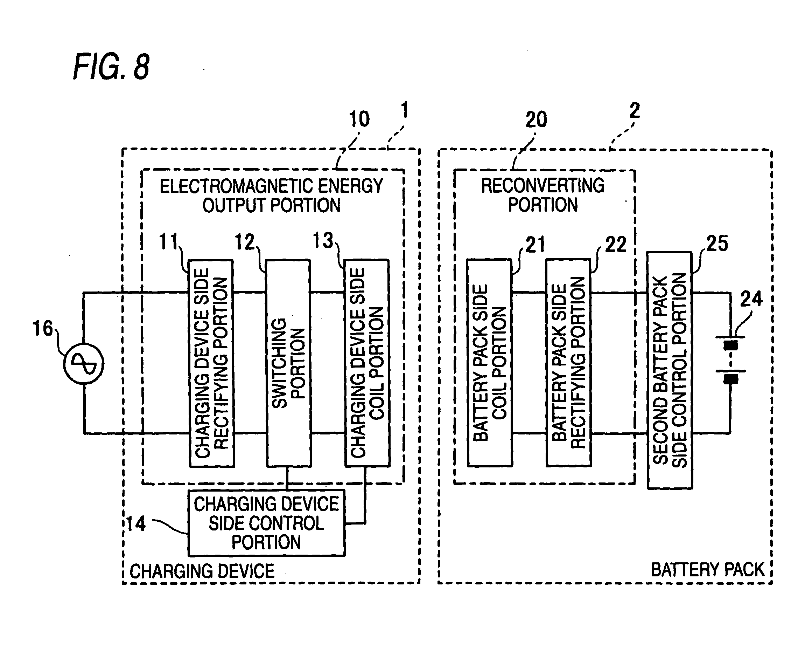

Fig. 8 is a block diagram showing the non-contact charging type battery system according to the second embodiment, and the battery pack 2 has a reconverting portion 20, a second battery pack side control portion 25 and a lithium ion battery 24.

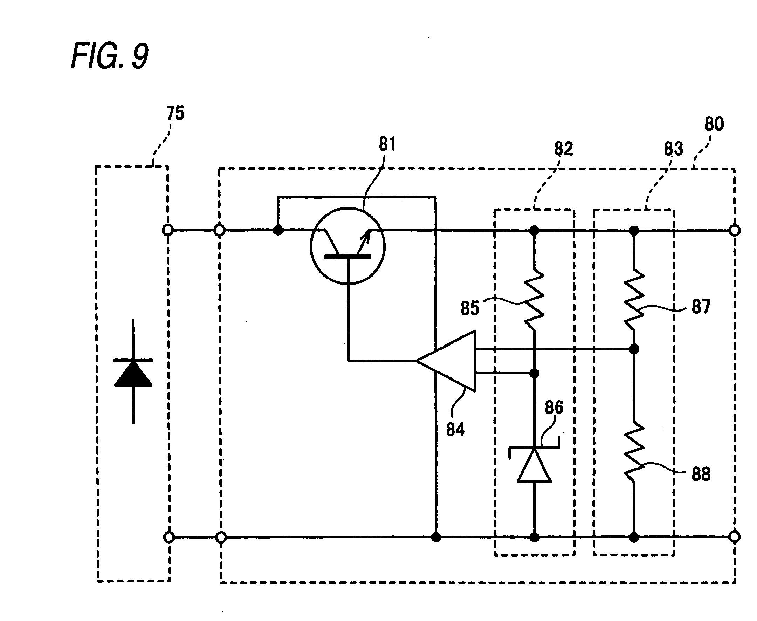

Fig. 9 is a circuit diagram showing a voltage control circuit 80 functioning as the second battery pack side control portion 25, and the voltage control circuit 80 includes a second battery pack side transistor 81 having a collector connected to an anode terminal of a battery pack side rectifying circuit 75 and an emitter connected to an anode terminal of the lithium ion battery 24, a reference voltage generating circuit 82 connected between the anode terminal and a cathode terminal in the lithium ion battery 24, an actual voltage detecting circuit 83, and a voltage control amplifier 84.

The reference voltage generating circuit 82 is obtained by a series connection of a first resistor 85 and a Zener diode 86, and the actual voltage detecting circuit 83 is a series resistor of a second resistor 87 and a third resistor 88.

A common node of the first resistor 85 and the Zener diode 86 is connected to a first input terminal of the voltage control amplifier 84, and a common node of the second resistor 87 and the third resistor 88 is connected to a second input terminal of the voltage control amplifier 84.

An operation according to the second embodiment will be described below with reference to Figs. 8 and 9.

When the battery pack 2 is caused to approach a charging device 1, an ac power is induced into the battery pack side coil 74.

At this time, when a reference voltage generated in the reference voltage generating circuit 82 is set to be 4.2 V, a charging current for generating the ac power induced into the battery pack side coil 74 is 1C at a maximum as described above. Therefore, constant current charging for bringing a charging current of 1C is carried out until a terminal voltage of the lithium ion battery 24 reaches 4.2 V.

When the terminal voltage of the lithium ion battery 24 reaches 4.2 V, the voltage control amplifier 84 compares an actual voltage detected by the actual voltage detecting circuit 83 with the reference voltage (4.2 V) generated in the reference voltage generating circuit 82, and supplies a control voltage corresponding to a deviation between the actual voltage and the reference voltage to a base of the second battery pack side transistor 81.

The second battery pack side transistor 81 controls a current flowing from a collector of the second battery pack side transistor 81 to an emitter thereof corresponding to the control voltage to be applied to the base.

When the charging current to flow into the lithium ion battery 24 is changed, the reference voltage generated by the reference voltage generating circuit 82 is constant. On the other hand, the actual voltage detected by the actual voltage detecting circuit 83 is changed. Therefore, the current flowing to the second battery pack side transistor 81 is controlled so that the terminal voltage of the lithium ion battery 24 is maintained to be the reference voltage and constant voltage charging is thus carried out.

Since structures and operations according to the second embodiment other than those described above are the same as those in the first embodiment, repetitive description will be omitted.

According to the second embodiment, also when the charging device side coil 63 and the battery pack side coil 74 are coupled to each other most closely, the charging current is equal to or smaller than a predetermined current. Therefore, it is possible to omit a current control function from a circuit of the battery pack 2.

(Third Embodiment)

In a structure according to a third embodiment, only when a magnetic body disposed actually on a charging device side coil 63 is a battery pack 2, an oscillating circuit 66 is brought into a continuous oscillating state.

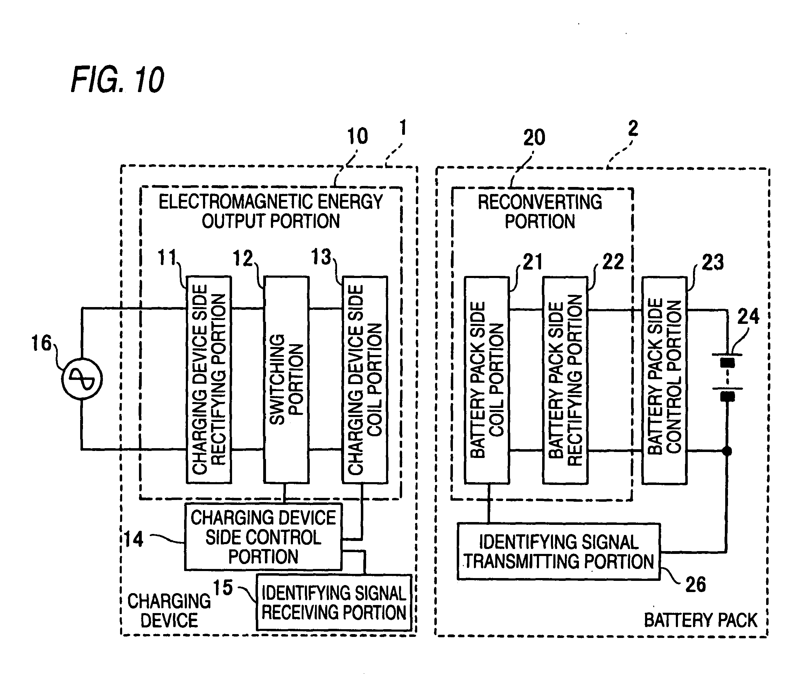

Fig. 10 is a block diagram showing a non-contact charging type battery system according to the third embodiment, and an identifying signal transmitting portion 26 is added into a battery pack 2 and an identifying signal receiving portion 15 is added into a charging device 1.

The identifying signal transmitting portion 26 has such a structure as to transmit a predetermined identifying signal upon receipt of a supply of a power from a lithium ion battery 24, and to radiate the same identifying signal from a transmitting antenna built in the battery pack 2. A battery pack side coil 74 can also be used as the transmitting antenna.

The identifying signal receiving portion 15 has such a structure as to receive an identifying signal transmitted from the battery pack 2 and to detect that the battery pack 2 is disposed in the vicinity of the charging device 1, and to output a control signal to a charging device side control portion 14. The charging device side coil 63 can also be used as a receiving antenna.

Next, description will be given to an operation according to the third embodiment.

The identifying signal transmitting portion 26 built in the battery pack 2 always transmits the identifying signal upon receipt of the supply of the power from the lithium ion battery 24.

When the battery pack 2 is disposed on the charging device side coil 63 in the charging device 1, the identifying signal receiving portion 15 receives the identifying signal and gives a request for outputting a continuous operation command to the charging device side control portion 14. The charging device side control portion 14 gives a command for a continuous operation to a switching portion 12 upon receipt of the request of the identifying signal receiving portion 15. An energy is continuously supplied from the charging device side coil 63 to the battery pack side coil 74 so that the lithium ion battery 24 is charged.

As described above, according to the third embodiment, it is confirmed that the magnetic body disposed on the charging device side coil 63 is the battery pack 2 and the charging is then started. Therefore, it is possible to suppress an unnecessary charging operation in the case in which a conductor other than the battery pack 2 is disposed on the charging device side coil 63.

While the description has been given to the case in which the third embodiment is applied to the first embodiment, it is apparent that the third embodiment can also be applied to the second embodiment.

By displaying a control state of the charging device side control portion 14 for the switching portion 12, moreover, a user can easily grasp an operation state.

For example, it is also possible to carry out flicker lighting of a green LED when the charging device side control portion 14 gives a command for an intermittent transmission, to continuously turn on the green LED when detecting an identifying signal sent from the battery pack 2, to carry out the flicker lighting of a red LED when giving a command for a continuous operation, to continuously turn on the red LED when completing the charging, and to cause the green LED to carry out the flicker lighting again and to turn off the red LED when detecting no identifying signal from the battery pack 2.

While the invention has been described in detail with reference to specific embodiments, it is apparent to the skilled in the art that various changes and modifications can be made without departing from the spirit and scope of the invention.

INDUSTRIAL APPLICABILITY

As described above, the non-contact charging type battery system according to the invention has an advantage that a structure of a charging device for a secondary battery requiring to control a charging voltage and a structure of a circuit provided around the secondary battery can be simplified more greatly than those in a conventional system, and is effective for a secondary battery charging system.

**Claims**

1. A non-contact charging type battery system comprising a battery pack for storing a secondary battery requiring to control a charging voltage and a charging device for supplying a charging power to the secondary battery,
the charging device having an electromagnetic energy output portion for outputting the charging power as an electromagnetic energy, and
the battery pack including a reconverting portion for reconverting the electromagnetic energy into the charging power, and a control portion for controlling at least a charging voltage in the charging voltage and a charging current when the secondary battery is charged with the charging power which is obtained by the reconversion.

2. The non-contact charging type battery system according to claim 1, wherein the electromagnetic energy output portion includes a charging device side rectifying portion for rectifying a commercial power supply, a switching portion for switching a power rectified by the charging device side rectifying portion, and a charging device side coil portion for outputting the power thus switched as an electromagnetic energy, and
the reconverting portion includes a battery pack side coil portion for converting the electromagnetic energy into an ac power, and a battery pack side rectifying portion for converting the ac power into a dc power.

3. The non-contact charging type battery system according to claim 1 or 2, wherein the battery pack includes an identifying signal transmitting portion for transmitting a predetermined identifying signal, and the charging device includes an identifying signal receiving portion for controlling the switching portion into an operation state when receiving the identifying signal.

4. A charging device for supplying a charging power to a secondary battery requiring to control a charging voltage, comprising:

a rectifying portion for rectifying a commercial power supply, a switching portion for switching a power rectified by the rectifying portion, a coil portion for outputting the power thus switched as an electromagnetic energy, and a control portion for controlling an operation of the switching portion corresponding to a voltage on both ends of the coil portion.

5. The charging device according to claim 4, wherein the control portion controls the switching portion into a continuous operation state when the voltage is lower than a predetermined threshold voltage, controls the switching portion into a stop state when the voltage is equal to or higher than the threshold voltage, and controls the switching portion into an intermittent operation state when a predetermined time passes after stopping the operation of the switching portion.

6. A battery pack for storing a secondary battery requiring to control a charging voltage, comprising:

a reconverting portion for reconverting an electromagnetic energy supplied from a charging device into a charging power, and a control portion for controlling a charging voltage and a charging current when charging the secondary battery with the charging power obtained by the reconversion.

7. The battery pack according to claim 6, further comprising a housing for integrally storing the reconverting portion, the control portion and the secondary battery.

8. A battery pack for storing a secondary battery requiring to control a charging voltage, comprising:

a reconverting portion for reconverting an electromagnetic energy supplied from a charging device into a charging power, and a control portion for controlling a charging voltage when charging the secondary battery with the charging power obtained by the reconversion.

9. The battery pack according to claim 8, further comprising a housing for integrally storing the reconverting portion, the control portion and the secondary battery.

10. The battery pack according to any of claims 6 to 9, wherein the housing and a coat of the secondary battery are formed by an insulating material.

**Amended claims under Art. 19.1 PCT**

**1.** (Cancel)

**2.** (Amended) A non-contact charging type battery system comprising a battery pack for storing a secondary battery requiring to control a charging voltage and a charging device for supplying a charging power to the secondary battery,
the charging device having an electromagnetic energy output portion for outputting the charging power as an electromagnetic energy, and
the battery pack including a reconverting portion for reconverting the electromagnetic energy into the charging power, and a control portion for controlling at least a charging voltage in the charging voltage and a charging current when the secondary battery is charged with the charging power which is obtained by the reconversion,
wherein the electromagnetic energy output portion includes a charging device side rectifying portion for rectifying a commercial power supply, a switching portion for switching a power rectified by the charging device side rectifying portion, and a charging device side coil portion for outputting the power thus switched as an electromagnetic energy, and
the reconverting portion includes a battery pack side coil portion for converting the electromagnetic energy into an ac power, and a battery pack side rectifying portion for converting the ac power into a dc power.

**3.** (Amended) The non-contact charging type battery system according to claim 2, wherein the battery pack includes an identifying signal transmitting portion for transmitting a predetermined identifying signal, and
the charging device includes an identifying signal receiving portion for controlling the switching portion into an operation state when receiving the identifying signal.

**4.** A charging device for supplying a charging power to a secondary battery requiring to control a charging voltage, comprising:

a rectifying portion for rectifying a commercial power supply, a switching portion for switching a power rectified by the rectifying portion, a coil portion for outputting the power thus switched as an electromagnetic energy, and a control portion for controlling an operation of the switching portion corresponding to a voltage on both ends of the coil portion.

**5.** The charging device according to claim 4, wherein the control portion controls the switching portion into a continuous operation state when the voltage is lower than a predetermined threshold voltage, controls the switching portion into a stop state when the voltage is equal to or higher than the threshold voltage, and controls the switching portion into an intermittent operation state when a predetermined time passes after stopping the operation of the switching portion.

**6.** (Cancel)

**7.** (Cancel)

**8.** (Cancel)

**9.** (Cancel)

**10.** (Cancel)

*FIG. 1*

*FIG. 2*

## FIG. 3

ELECTROMAGNETIC ENERGY
OUTPUT PORTION — 10, 1

RECONVERTING
PORTION — 20, 2

11 — CHARGING DEVICE SIDE RECTIFYING PORTION

12 — SWITCHING PORTION

13 — CHARGING DEVICE SIDE COIL PORTION

16

14 — CHARGING DEVICE SIDE CONTROL PORTION

CHARGING DEVICE

21 — BATTERY PACK SIDE COIL PORTION

22 — BATTERY PACK SIDE RECTIFYING PORTION

23 — BATTERY PACK SIDE CONTROL PORTION

24

BATTERY PACK

FIG. 4

PORTABLE TELEPHONE CIRCUIT

OSCILLATING CIRCUIT

OSCILLATION CONTROL CIRCUIT

VOLTAGE AND CURRENT CONTROLLING IC

EP 1 962 365 A1

FIG. 5 (a)

74
72,75
27
24

FIG. 5 (b)

74
72,75
27
24

FIG. 5 (c)

74
72,75
27
74
24

FIG. 5 (d)

74
72,75
27
24

FIG. 5 (e)

74
72,75
27
24

# FIG. 6

## FIG. 7

EP 1 962 365 A1

*FIG. 8*

FIG. 9

EP 1 962 365 A1

FIG. 10

BATTERY PACK

2

RECONVERTING PORTION 20

23 BATTERY PACK SIDE CONTROL PORTION
22 BATTERY PACK SIDE RECTIFYING PORTION
21 BATTERY PACK SIDE COIL PORTION

24

26 IDENTIFYING SIGNAL TRANSMITTING PORTION

1

ELECTROMAGNETIC ENERGY OUTPUT PORTION 10

13 CHARGING DEVICE SIDE COIL PORTION
12 SWITCHING PORTION
11 CHARGING DEVICE SIDE RECTIFYING PORTION

14 CHARGING DEVICE SIDE CONTROL PORTION
15 IDENTIFYING SIGNAL RECEIVING PORTION

CHARGING DEVICE

16

# FIG. 11

## INTERNATIONAL SEARCH REPORT

| | International application No. |
|---|---|
| | PCT/JP2005/022798 |

A. CLASSIFICATION OF SUBJECT MATTER
*H01M10/44*(2006.01)i, *H02J7/00*(2006.01)i

According to International Patent Classification (IPC) or to both national classification and IPC

B. FIELDS SEARCHED

Minimum documentation searched (classification system followed by classification symbols)
H01M10/44, H02J7/00

Documentation searched other than minimum documentation to the extent that such documents are included in the fields searched
Jitsuyo Shinan Koho     1922-1996   Jitsuyo Shinan Toroku Koho   1996-2006
Kokai Jitsuyo Shinan Koho   1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 10-21968 A  (NEC Corp.),<br>23 January, 1998 (23.01.98),<br>Claims; Par. Nos. [0002] to [0003], [0016];<br>Fig. 3<br>(Family: none) | 1,6-10<br>2-3<br>4-5 |
| X<br>Y<br>A | JP 2003-153457 A  (Denso Corp.),<br>23 May, 2003 (23.05.03),<br>Claims; Par. Nos. [0013], [0020]<br>(Family: none) | 1,8-10<br>2-3,6-7<br>4-5 |
| Y | JP 7-177667 A  (Victor Company Of Japan, Ltd.),<br>14 July, 1995 (14.07.95),<br>Claims; Fig. 1<br>(Family: none) | 2 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>25 July, 2006 (25.07.06) | Date of mailing of the international search report<br>08 August, 2006 (08.08.06) |
|---|---|
| Name and mailing address of the ISA/<br>Japanese Patent Office | Authorized officer |
| Facsimile No. | Telephone No. |

Form PCT/ISA/210 (second sheet) (April 2005)

20

**INTERNATIONAL SEARCH REPORT**

International application No.

PCT/JP2005/022798

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 63-31432 A  (Matsushita Electric Works, Ltd.),<br>10 February, 1988 (10.02.88),<br>Claims; Fig. 1<br>(Family: none) | 2 |
| Y | JP 7-170314 A  (TDK Corp.),<br>04 July, 1995 (04.07.95),<br>Claims; Fig. 3<br>(Family: none) | 2 |
| Y | JP 6-121407 A  (Sharp Corp.),<br>28 April, 1994 (28.04.94),<br>Claims; Fig. 8<br>(Family: none) | 3 |
| Y | JP 2003-257497 A  (Hitachi Maxell, Ltd.),<br>12 September, 2003 (12.09.03),<br>Claims; Fig. 7<br>(Family: none) | 3 |
| Y | JP 2004-282881 A  (Mitsumi Electric Co., Ltd.),<br>07 October, 2004 (07.10.04),<br>Claims<br>(Family: none) | 6-7 |

Form PCT/ISA/210 (continuation of second sheet) (April 2005)

**EP 1 962 365 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003244855 A